# EUROPÄISCHE PATENTSCHRIFT

(11) **EP 4 118 361 B1**
(45) Veröffentlichungstag und Bekanntmachung des Hinweises auf die Patenterteilung: **08.01.2025**
(21) Anmeldenummer: 21708213.0
(22) Anmeldetag: 25.02.2021
(51) Int. Cl.: F16H 57/04

(54) **GETRIEBE MIT LÜFTERANORDNUNG**
TRANSMISSION HAVING A FAN ASSEMBLY
TRANSMISSION COMPRENANT UN ENSEMBLE VENTILATEUR

(30) Priorität: 13.03.2020 DE 102020001683
(43) Veröffentlichungstag der Anmeldung: 18.01.2023
(73) Patentinhaber: SEW-EURODRIVE GmbH & Co. KG, 76646 Bruchsal (DE)
(72) Erfinder: VÖLKER, Konstantin, 76646 Bruchsal (DE); KNITTEL, Jan, 76706 Dettenheim (DE); KUNIK, Claus, 68753 Waghäusel (DE)
(86) Internationale Anmeldenummer: PCT/EP2021/054737
(87) Internationale Veröffentlichungsnummer: WO 2021/180484

(56) Entgegenhaltungen:
- CN-U- 203 394 862
- DE-A1- 102005 031 197
- DE-A1- 102008 010 912
- US-A1- 2011 179 903
- US-A1- 2014 338 495

## Beschreibung

Die Erfindung betrifft ein Getriebe mit Lüfteranordnung.

Es ist allgemein bekannt, dass eine Lüfteranordnung zum Kühlen einer Vorrichtung verwendbar ist.

**Aus der** DE 10 2008 010 912 A1 **ist als nächstliegender Stand der Technik ein Lüfterrad und eine Lüfterhaube mit einstückig an der Lüfterhaube, also integriert, ausgebildetem Lüftergitter bekannt.**

**Aus der** DE 10 2005 031 197 A1 **ist ein Antrieb bekannt, wobei ein Lüfter zur Kühlung eines Getriebes des Antriebs vorgesehen ist.**

Aus der DE 11 2014 000 834 T5 ist eine Kraftübertragungsvorrichtung bekannt.

Aus der DE 10 2008 017 755 A1 ist eine Kühlanordnung für ein Getriebe bekannt.

Aus der DE 10 2007 009 366 A1 ist **als nächstliegender Stand der Technik ein Lüfterrad bekannt.**

**Aus der** GB 436 416 A **ist eine luftgekühlte Getriebeeinheit bekannt.**

**Aus der** US 4 872 502 A **ist eine Luftkühlung für ein umhülltes Getriebe bekannt.**

**Aus der** DE 10 2005 031 197 A1 **ist ein Antrieb mit Lüfter bekannt.**

**Aus der** US 2014 / 0 338 495 A1 **ist eine Leistungsübertragungvorrichtung bekannt.**

**Aus der** US 2011 / 0 179 903 A1 **ist ein Getriebe mit Flüssigkeitskühler bekannt.**

**Aus der** DE 11 2013 007 680 T5 **ist ein System zur Befestigung eines inneren Luftablenkblechs an einer Luftablenkkappe für elektrische Maschinen bekannt.**

**Aus der** US 2011 /179903 A1 **ist ein Getriebe mit Lüfter bekannt.**

**Aus der** CN 203 394 862 U **ist eine zweiteilige Struktur mit Ausnehmungen bekannt.**

Der Erfindung liegt daher die Aufgabe zugrunde, ein Getriebe mit Lüfteranordnung weiterzubilden, wobei eine einfache und kostengünstige Herstellung erreichbar sein soll.

Erfindungsgemäß wird die Aufgabe bei dem Getriebe nach den in Anspruch 1 angegebenen Merkmalen gelöst.

**Von Vorteil ist dabei, dass die Haubenteile der Lüfterhaube zwar über den Halterahmen gehalten werden, jedoch das Deckteil funktional als axiale Verlängerung der Lüfterhaube fungiert und nicht über den Halterahmen gehalten werden muss sondern am Gehäuse des Getriebes befestigt und gehalten ist. Optional darf zwar das Deckteil mit einem der Haubenteile verbunden werden, um eine möglichst hohe Dichtheit zwischen Deckteil und Lüfterhaube zu erreichen und die Verluste des geförderten Luftstroms gering zu halten. Jedoch ist diese Verbindung nicht tragend, da ansonsten der Halterahmen zu große Tragkräfte aufbringen müsste und die Tragkraft für das Deckteil durch das Haubenteil durchzuleiten wäre. Erfindungsgemäß ist das Haubenteil mit sehr wenig Masse und Material herstellbar und ist daher ohne besonderen Aufwand vom Halterahmen tragbar. Das Deckteil ist mittels Laschen am Gehäuse des Getriebes befestigbar und getragen. Es ist also nicht freitragend ausgebildet. Nachteilig ist dabei, dass Gewindebohrungen zur Befestigung des Deckteils in das Gehäuse eingebracht werden müssen. Vorteil ist aber hierdurch, dass das Deckteil aus dünnem Blech oder Kunststoff herstellbar ist. Da sogar eine Herstellung der Haubenteile und des Deckteils als Stanz-Biegeteil aus Stahlblech ausführbar ist, ist eine kostengünstige Ausführung ermöglicht. Die Befestigung des Deckteils am Gehäuse und die Separierung des Deckteils vom Haubenteil bewirkt außerdem eine verringerte Schwingneigung und somit höhere Stabilität.**

**Das Deckteil leitet einen Anteil des vom Lüfter geförderten Luftstroms entlang des Getriebegehäuses. Somit ist eine verbesserte Entwärmung des Getriebes erreichbar. Hierzu ist das Deckteil derart geformt, dass das von Laschen, die am Getriebegehäuse befestigt sind, gehaltene Deckteil den Anteil des Luftstroms zwischen dem Getriebegehäuse und dem Deckteil durchleitet.**

**Erfindungsgemäß** ist das Gitter aus zwei Gitterteilen gebildet,
wobei jedes Gitterteil mit jedem der beiden Haubenteile verbunden, insbesondere mittels Schrauben verbunden, ist, insbesondere also das erste Gitterteil sowohl mit dem ersten als auch mit dem zweiten Haubenteil verbunden ist und das zweite Gitterteil sowohl mit dem ersten als auch mit dem zweiten Haubenteil verbunden ist. Von Vorteil ist dabei, dass die Stabilität der Lüfterhaube mittels der als Verbindungsmittel fungierenden Gitterteile erhöht ist. Somit sind auch Resonanzschwingungen der Lüfterhaube unterdrückt. Nachteilig ist allerdings die aufwendige Montage.

**Bei einer vorteilhaften Ausgestaltung ist ein mit der Lasche verbundener Oberflächenbereich des Gehäuses des Getriebes eben ausgebildet und somit von einer ersten Ebene umfasst,**
**wobei ein Verbindungsbereich des Deckteils, welcher die Lasche berührt oder welcher an die Lasche angrenzt, eben ausgebildet ist und somit von einer zweiten Ebene umfasst ist,**
**wobei die erste Ebene zur zweiten Ebene, insbesondere die Normalenrichtung der ersten Ebene zur Normalenrichtung der zweiten Ebene, einen nicht verschwindenden Winkel aufweist, insbesondere also nicht zueinander parallel ausgerichtet ist oder sind. Von Vorteil ist dabei, dass die Lasche als Winkelteil ausführbar ist, so dass eine Verbindung des Deckteils mit dem Gehäuse ermöglicht ist, obwohl das Deckteil nicht parallel zum Oberflächenbereich des Gehäuses ausgerichtet ist. Die Lasche überbrückt und verbindet somit das Deckteil mit dem Gehäuse, wobei zum Andrücken der Lasche ans Gehäuse eine Schraube in eine Gewindebohrung des Gehäuses eingeschraubt ist und der Kopf der Schraube die Lasche ans Gehäuse andrückt. Die Schwingneigung ist hierdurch reduziert.**

**Bei einer vorteilhaften Ausgestaltung ist die Lasche als Stanz-Biegeteil hergestellt,**
**insbesondere wobei die Lasche mit dem Deckteil mittels einer Schraube verbunden ist, deren Schraubenkopf das Deckteil und die Lasche zu einer Mutter hindrückt, in welche die Schraube eingeschraubt ist in eine Mutter. Von Vorteil ist dabei, dass die Lasche als separates Blechteil herstellbar ist, so dass die Schraube durch ein Langloch der Lasche führbar ist und somit ein einfacher Ausgleich von Toleranzen erreichbar ist. Die Schwingneigung ist hierdurch reduziert.**

**Bei einer anderen vorteilhaften Ausgestaltung ist die Lasche mit dem Deckteil einstückig, insbesondere einteilig, ausgebildet ist, insbesondere als Biegebereich am Deckteil einstückig, insbesondere einteilig, ausgebildet ist. Von Vorteil ist dabei, dass eine weitere Verringerung der Schwingneigung und der Teileanzahl erreichbar ist. Allerdings ist eine Herstellung des Deckteils mit geringer Toleranz und/oder in hoher Qualität erforderlich.**

**Bei einer vorteilhaften Ausgestaltung wird die Lasche von einem Schraubenkopf einer in eine Gewindebohrung des Gehäuses eingeschraubten Schraube ans Gehäuse angedrückt. Von Vorteil ist dabei, dass eine einfache kostengünstig tragende Befestigung des Deckteils ermöglicht ist.**

**Bei einer vorteilhaften Ausgestaltung ist das Deckteil mit dem ersten Haubenteil verbunden. Von Vorteil ist dabei, dass nur ein geringer Anteil des Luftstroms verloren geht und die Schwingungsneigung reduzierbar ist.**

**Bei einer vorteilhaften Ausgestaltung ist der vom Deckteil in axialer Richtung überdeckte Bereich an den vom ersten Haubenteil in axialer Richtung überdeckten Bereich angrenzt und/oder beabstandet. Von Vorteil ist dabei, dass eine Schwingungsneigung reduziert ist, da das Deckteil und das erste Haubenteil schwingungsentkoppelt sind. Somit ist die Gesamtschwingungsneigung reduziert.**

Bei einer vorteilhaften Ausgestaltung ist das Gitter aus zwei Gitterteilen gebildet, deren erste Trennlinie eine gerade Strecke ist oder aus zwei, in Flucht zueinander liegenden geraden Strecken gebildet ist,
wobei die Haube aus zwei Haubenteilen gebildet ist, deren zweite Trennlinie eine ebene, aus geraden Streckenabschnitten zusammengesetzte Kurve ist.

Von Vorteil ist dabei, dass eine einfache Herstellung ermöglicht ist. Denn die Gitterteile sind viel kleiner als ein einstückig ausgeführtes Gitter. Ebenso sind die Haubenteile einfach aus einem Blech fertigbar, indem gestanzt und gebogen wird.

Durch die nicht parallele Ausrichtung der beiden Trennlinien zueinander ist eine erhöhte Stabilität insbesondere gegen mechanische Schwingungen erreichbar.

Bei einer vorteilhaften Ausgestaltung sind die Gitterteile an ihrem jeweiligen Außenumfang jeweils derart polygonal ausgeformt sind, dass die Berührfläche zwischen dem jeweiligen Gitterteil und dem jeweiligen Haubenteil jeweils aus ebenen Flächenstücken zusammengesetzt ist. Von Vorteil ist dabei, dass eine stabile Verbindung der Gitterteile mit den Haubenteilen mittels Schrauben herstellbar ist und Resonanzschwingungen unterdrückbar sind.

Bei einer vorteilhaften Ausgestaltung spannen die erste Trennlinie und die Drehachse der eintreibenden Welle eine erste Ebene auf,
wobei die zweite Trennlinie und die Drehachse der eintreibenden Welle eine zweite Ebene aufspannen,
wobei die zweite Ebene zur ersten Ebene senkrecht ausgerichtet ist oder zumindest einen Winkel zwischen 30° und 90° aufweist. Von Vorteil ist dabei, dass eine erhöhte Stabilität erreichbar ist und somit Schwingungen unterdrückbar sind.

Bei einer vorteilhaften Ausgestaltung ist die aus den beiden Haubenteilen gebildete Haube derart geformt, dass die Haube eine axial durchgehende Ausnehmung aufweist, insbesondere die bezogen auf die eintreibende Welle mittig angeordnet ist. Von Vorteil ist dabei, dass die Haubenteile jeweils nur geringe Masse aufweisen und als Lüfterhaubengitter die beiden Gitterteile verwendbar sind. Somit sind sowohl die Haubenteile also auch die Gitterteile jeweils als Stanz-Biegeteil herstellbar, wobei eine effiziente Ausnutzung des Blechs beim Ausstanzen erreichbar ist.

Bei einer vorteilhaften Ausgestaltung ist an den aus Blech als Stanz-Biegeteile hergestellten Haubenteilen ein jeweiliger, in die Ausnehmung hineinragender Laschenbereich ausgebildet, an welchem das erste oder das zweite Gitterteil befestigt ist, insbesondere mittels Schrauben befestigt ist. Von Vorteil ist dabei, dass eine einfache sichere Befestigung für die Gitterteile erreichbar ist.

Bei einer vorteilhaften Ausgestaltung ist an den aus Blech als Stanz-Biegeteile hergestellten Haubenteilen ein jeweiliger, in die Ausnehmung hineinragender Laschenbereich ausgebildet, an welchem das erste oder das zweite Gitterteil befestigt ist, insbesondere mittels Schrauben befestigt ist,
insbesondere wobei am jeweiligen Laschenbereich Schraubmuttern angeschweißt sind zur Bereitstellung von Gewindebohrungen für die Schrauben. Von Vorteil ist dabei, dass das Haubenteil einfach und kostengünstig bereitstellbar ist und die Gitterteile nur angeschraubt werden müssen.

Bei einer alternativen vorteilhaften Ausgestaltung ragt an den aus Blech als Stanz-Biegeteile hergestellten Haubenteilen ein jeweiliger, an der Innenseite des jeweiligen Haubenteils angeschweißtes Rahmenteil in die Ausnehmung hinein, an welchem das erste oder das zweite Gitterteil befestigt ist, insbesondere mittels Schrauben befestigt ist,
insbesondere wobei am Rahmenteil Schraubmuttern angeschweißt sind zur Bereitstellung von Gewindebohrungen für die Schrauben. Von Vorteil ist dabei, dass die Haubenteile durch das strebenartige Rahmenteil versteift sind und somit schlagfest sind.

Bei einer vorteilhaften Ausgestaltung bedeckt die Ausnehmung insbesondere vollständig von dem Gitter, insbesondere von den beiden Gitterteilen,
insbesondere so, dass der axial eintretende Luftstrom durch das Gitter hindurchtritt. Von Vorteil ist dabei, dass die Gitteröffnungen des Gitters derart klein sind, dass ein Schutz gegen Durchgreifen einer menschlichen Hand vorgesehen ist.

Bei einer vorteilhaften Ausgestaltung berühren die beiden Gitterteile sich entlang der ersten Trennlinie oder weisen einen Abstand von weniger als 5 mm zueinander auf.

Bei einer vorteilhaften Ausgestaltung berühren sich die beiden Haubenteile entlang der zweiten Trennlinie berühren oder weisen einen Abstand von weniger als 5 mm zueinander auf. Von Vorteil ist dabei, dass entlang der Trennlinien entweder Berührung oder alternativ nur ein sehr kleiner Abstand vorhanden ist, welcher ein Durchgreifen mit einer menschlichen Hand verhindert.

Bei einer vorteilhaften Ausgestaltung tritt der vom Lüfterrad geforderte Luftstrom zwischen dem Gehäuse des Getriebes und der Haube aus, insbesondere derart gerichtet, dass er dem Gehäuse des Getriebes entlang strömt. Von Vorteil ist dabei, dass das Getriebe möglichst effektiv und gleichverteilt gekühlt wird.

Bei einer vorteilhaften Ausgestaltung weist die Haube eine in Umfangsrichtung unregelmäßig polygonal geformte Stirnseite auf,
insbesondere der radial äußere Umfang der Stirnseite der Haube unregelmäßig polygonal geformt ist. Von Vorteil ist dabei, dass zwar ein kreisrunder Lüfter verwendet wird für ein quaderförmiges Getriebe, aber trotzdem der Luftstrom möglichst gleichmäßig am Umfang verteilt am Getriebe entlang strömt.

Bei einer vorteilhaften Ausgestaltung sind die Haubenteile und/oder die Gitterteile jeweils als Stanz-Biegeteile gefertigt. Von Vorteil ist dabei, dass eine einfache kostengünstige Herstellung ermöglicht ist.

Bei einer vorteilhaften Ausgestaltung ist an jedem Haubenteil, insbesondere an der Innenwand jedes Haubenteils, ein Eingriffschutz befestigt, welcher zwischen Habenteil und Gehäuse des Getriebes angeordnet ist,
wobei der Eingriffschutz durchgehende Gitteröffnungen aufweist,
insbesondere und von der vom Lüfterrad geförderten Luftstrom durchströmt wird. Von Vorteil ist dabei, dass auch ein Eingreifen entgegen der Strömungsrichtung des vom Lüfterrad geförderten Luftstroms verhinderbar ist. Außerdem ist der Eingreifschutz an der Innenwandung des Haubenteils angebracht. Somit ist eine direkte Verbindung mit dem Getriebe nicht notwendig.

Bei einer vorteilhaften Ausgestaltung weist jedes Haubenteil radial durchgehende Ausnehmungen auf, welche als Schlitz, Langloch oder Ellipse ausgeformt sind, wobei die jeweils längste Ausdehnung der jeweiligen Ausnehmung in axialer Richtung ausgerichtet ist.

Von Vorteil ist dabei, dass Luft radial einströmen kann, insbesondere, wenn axiales Einströmen durch nahe an den Gitterteilen angeordnete Gegenstände oder Vorrichtungen erschwert oder verhindert ist. Somit ist außerdem ein Berührschutz gegen das Berühren von drehenden Teilen bewirkt.

Bei einer vorteilhaften Ausgestaltung weist jedes Gitterteil ein gleichmäßiges und/oder regelmäßiges ebenes Gitter von durch das jeweilige Gitterteil axial durchgehenden, insbesondere sechseckförmigen Ausnehmungen, insbesondere Gitteröffnungen, auf. Von Vorteil ist dabei, dass ein möglichst großer Luftstrom mit möglichst geringem Luftwiderstand axial einströmbar ist. Vorzugswiese ist der vom jeweiligen Gitterteil dabei erzeugte Strömungswiderstand gering. Trotzdem ist ein Berührschutz gegen das Berühren von drehenden Teilen erreicht.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

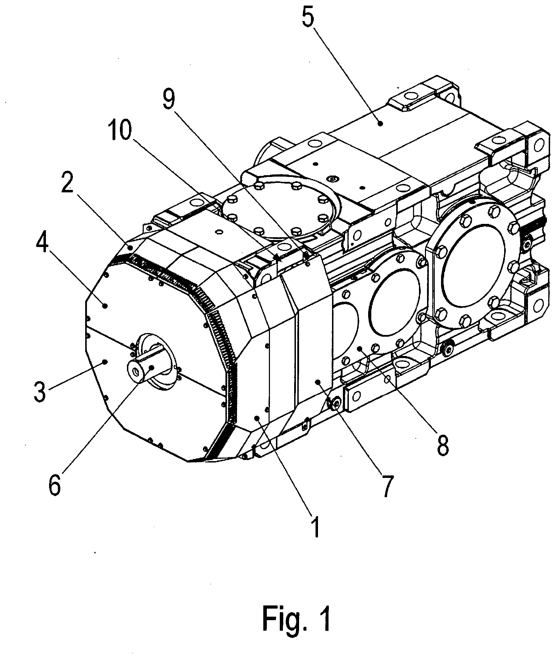

In der Figur 1 ist ein erfindungsgemäßes Getriebe mit eintriebsseitig angeordnetem Lüfter in Schrägansicht dargestellt.

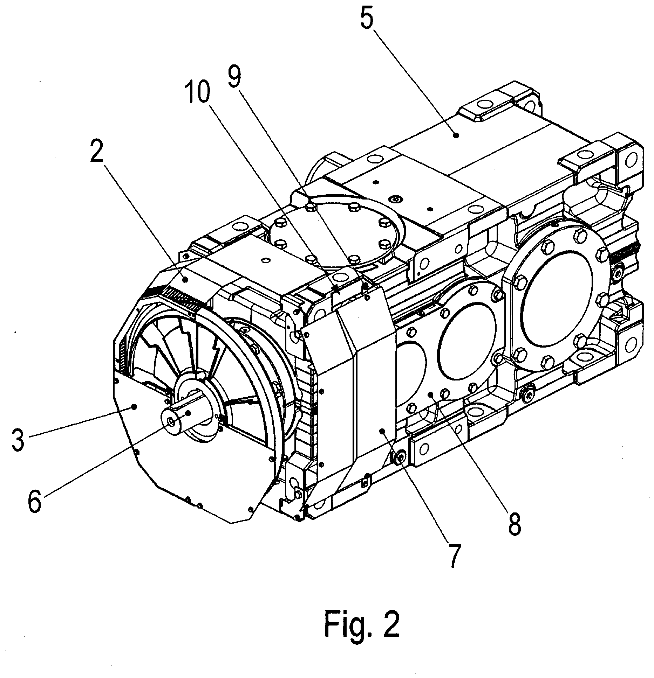

In der Figur 2 ist im Unterschied zu Figur 1 ein erstes Haubenteil 1 und ein zweites Gitterteil 4 ausgeblendet.

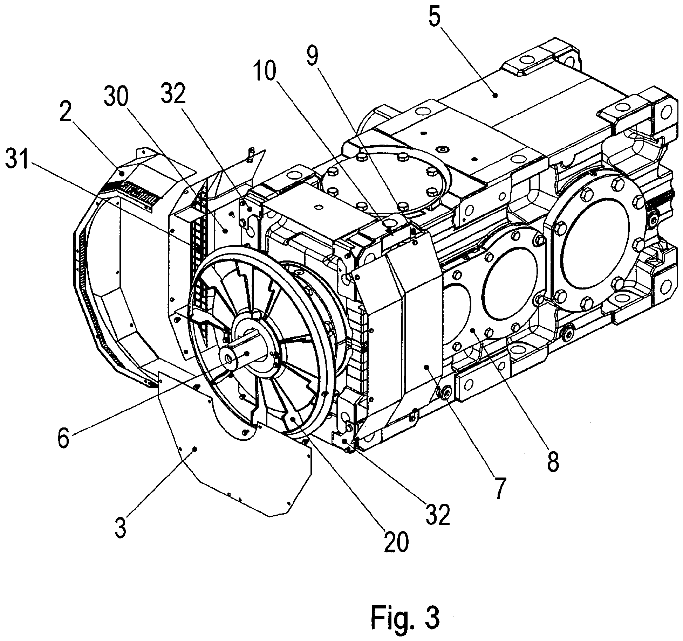

In der Figur 3 sind im Unterschied zu Figur 2 die außerhalb des Gehäuses 5 des Getriebes angeordneten Komponenten des Lüfters explodiert dargestellt, wobei ein zweistückig ausgeführter Halterahmen erkennbar ist.

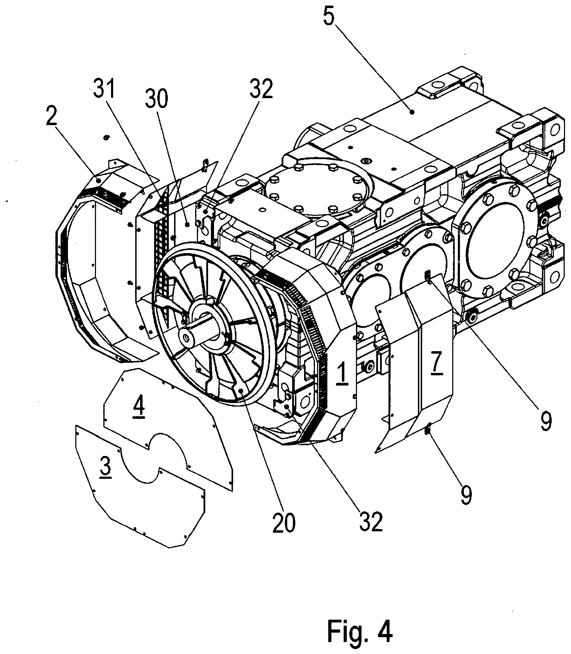

In der Figur 4 sind im Unterschied zu Figur 1 die außerhalb des Gehäuses 5 des Getriebes angeordneten Komponenten des Lüfters explodiert dargestellt.

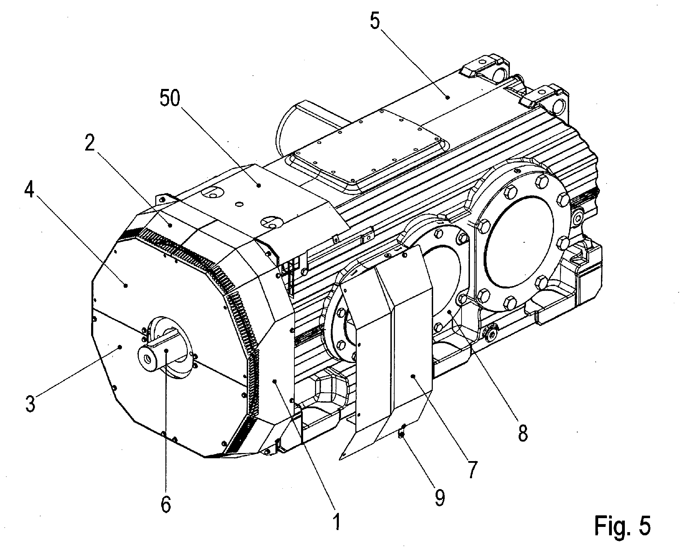

In der Figur 5 ist als weiteres Ausführungsbeispiel ein Getriebe in Schrägansicht dargestellt.

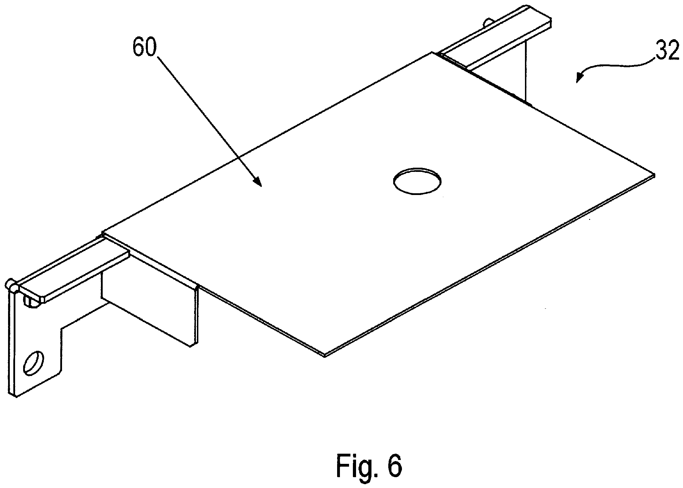

In der Figur 6 ist eines der beiden Stücke des Halterahmens 32 in Schrägansicht dargestellt.

Wie in den Figuren dargestellt, weist das Getriebe eine eintreibende Welle 6 auf, welche mittels Lagern drehbar gelagert ist in einem Gehäuse 5 des Getriebes.

Ein Lüfterrad 20 ist drehfest mit der eintreibenden Welle 6 des Getriebes verbunden und von einer Haubenanordnung umgeben, die an einem Halterahmen 32 am Gehäuse 5 des Getriebes befestigt ist. Der Halterahmen 32 ist mehrstückig, insbesondere zweistückig, ausgeführt und mittels Befestigungsschrauben mit dem Gehäuse 5 befestigt.

Die Haubenanordnung weist ein erstes Haubenteil 1 und ein zweites Haubenteil 2 auf, welche beide am Halterahmen 32 mittels Schrauben angeschraubt sind.

Dabei überdeckt jedes der beiden Haubenteile (1, 2) jeweils einen Umfangswinkel von 180° bezogen auf die Drehachse der eintreibenden Welle 6. Die Trennlinie zwischen den beiden Haubenteilen (1, 2) verläuft in dem in den Figuren gezeigten Ausführungsbeispiel vertikal.

Die beiden Haubenteile (1, 2) bilden somit eine Lüfterhaube, welche den vom Lüfterrad 20 geförderten Luftstrom führt, so, dass er an dem Gehäuse 5 entlang aus der Lüfterhaube 20 ausströmt. Das Gehäuse 5 des Getriebes ist grob gesehen quaderförmig. Da das Lüfterrad 20 aber rund ist, weist die aus den zwei, einander möglichst berührend oder zumindest sehr eng aneinander angeordneten Haubenteilen (1, 2) gebildete Lüfterhaube einen polygonalen Umfang auf. Somit ist der zwischen Lüfterhaube und Gehäuse 5 ausströmende Luftstrom möglichst wenig abhängig vom Umfangswinkel. Anders ausgedrückt ist der Lüfterhaube austretende Luftstrom möglichst gleichmäßig über die Umfangsrichtungen verteilt. Hierdurch ist eine optimale Kühlwirkung erzielbar. Dabei ragt das runde Lüfterrad 20 vorzugsweise zwar nicht an den Ecken des Quaders hervor, sondern nur an geraden Seitenflächen; jedoch ragt die Lüfterhaube auch an den Ecken hervor und lenkt somit einen austretenden Luftstrom auch bis an die Eckbereiche des Quaders heran.

Jedes Haubenteil 1, 2 ist derart als Stanz-Biegeteil insbesondere gebogen ausgeführt, dass es an seinem Umfang einen mit Ausnehmungen versehenen und somit luftdurchlässigen Bereich aufweist, welcher einen Luftstrom aus radialer Richtung kommend in die Lüfterhaube eintreten lässt.

Dabei bezieht sich die radiale Richtung auf die Drehachse der eintreibenden Welle.

Die aus den beiden Haubenteilen (1, 2) gebildete Haube ist derart geformt, dass die Haube eine axial durchgehende Ausnehmung aufweist, die mittig angeordnet ist. Außerdem sind an den aus Blech als Stanz-Biegeteile hergestellten Haubenteilen (1, 2) in die Ausnehmung hineinragende Laschenbereiche ausgebildet, an welchen ein erstes oder ein zweites Gitterteil (3, 4) befestigt sind, insbesondere mittels Schrauben befestigt sind.

Somit ist die Ausnehmung vollständig von den Gitterteilen 3 und 4 bedeckt. Der axial eintretende Luftstrom tritt durch dieses so gebildete Lüftergitter hindurch.

Zur Bereitstellung einer Gewindebohrung für Schrauben, welche die Gitterteile (3, 4) mit den Laschenbereichen der Haubenteile (1, 2) verbinden, werden Schraubmuttern an die Laschenbereiche angeschweißt. Somit sind die Gitterteile (3, 4) dann anschraubbar mittels der durch eine Ausnehmung des jeweiligen Laschenbereichs axial durchgehenden und in die Schraubmuttern eingeschraubten Schrauben, deren Schraubköpfe das jeweilige Gitterteil gegen den jeweiligen Laschenbereich drücken.

Die beiden Gitterteile 3 und 4 berühren sich entlang einer geraden Strecke oder weisen entlang einer geraden Strecke einen Abstand von weniger als 5 mm auf. Diese Strecke wird hier auch als erste Trennlinie bezeichnet.

Die erste Trennlinie und die Drehachse der eintreibenden Welle spannen eine erste Ebene auf.

Das erste Haubenteil 1 berührt das zweite Haubenteil 2 entlang einer ebenen Kurve oder weist entlang einer ebenen Kurve einen Abstand von weniger als 5 mm auf. Diese ebene Kurve wird hier auch als zweite Trennlinie bezeichnet.

Die zweite Trennlinie ist aus geraden Streckenabschnitten zusammengesetzt.

Die zweite Trennlinie und die Drehachse der eintreibenden Welle spannen eine zweite Ebene auf.

Die zweite Ebene ist nicht parallel zur ersten Ebene, sondern vorzugsweise senkrecht ausgerichtet oder weist zumindest einen Winkel zwischen 30° und 90° auf.

Somit ist eine erhöhte Stabilität erreicht, denn die Haubenteile (1, 2) sowie die Gitterteile (3, 4) sind als Stanz-Biegeteile aus Blech gefertigt. Durch den Winkel ist somit das Risiko einer eine Resonanzschwingung vermindert oder verhindert.

Die Gitterteile (3, 4) weisen jeweils ein vorzugsweise regelmäßiges, in den Figuren nicht dargestelltes Gitter von durchgehenden Ausnehmungen auf. Somit kann ein Luftstrom axial durchtreten und zum Lüfter gesogen werden.

An der Innenseite des ersten Haubenteils 1 ist ein Eingriffschutz 31 angeordnet, durch welchen der vom Lüfter geförderte Luftstrom hindurch austritt und vom ersten Haubenteil 1 derart gerichtet ausströmt, dass er an der Außenseite des Getriebes entlangströmt.

Außerdem weist das erste Haubenteil 1 eine halbkreisförmige Aussparung auf, so dass ein axial zur Aussparung hin hervorragender Lagerdeckelabschnitt eines das Lager der eintreibenden Welle abdeckenden Lagerdeckels einen genügend großen Abstand zum Haubenteil 1 aufweist, so dass die vom Lüfter angesaugte Luft möglichst gleichmäßig am Umfang durch die Aussparung eintritt und somit auch möglichst gleichmäßig am Umfang der Lüfterhaube austritt und somit das Gehäuse 5 gleichmäßig gekühlt ist.

Am Deckteil 30 ist ein Eingriffschutz 31 angebracht. Alternativ ist an der Innenseite des zweiten Haubenteils 2 ein Eingriffschutz 31 befestigbar, durch welchen der vom Lüfter geförderte Luftstrom hindurch austritt und vom zweiten Haubenteil 2 derart gerichtet ausströmt, dass er an der Außenseite des Getriebes entlangströmt.

Wie in den Figuren gezeigt, weist das zweite Haubenteil 2 außerdem eine halbkreisförmige Aussparung auf, so dass der axial zur Aussparung hin hervorragende Lagerdeckelabschnitt eines das Lager der eintreibenden Welle abdeckenden Lagerdeckels einen genügend großen Abstand zum zweiten Haubenteil 2 aufweist, so dass die vom Lüfter angesaugte Luft möglichst gleichmäßig am Umfang durch die Aussparung eintritt und somit auch möglichst gleichmäßig am Umfang der Lüfterhaube austritt und somit das Gehäuse 5 gleichmäßig gekühlt ist.

Die Lüfterhaube ist aber auch bei einem anderen Getriebe anbringbar, bei welchem der runde Lagerdeckelabschnitt nicht vorhanden ist oder weiter entfernt angeordnet ist. In diesem Fall wird die Aussparung am ersten Haubenteil 1 durch ein Anbringen eines Deckteils 30 verschlossen und somit der Luftstrom besser und gleichmäßiger am Gehäuse 5 entlang geleitet. Ebenso wird In diesem Fall die Aussparung am zweiten Haubenteil 1 durch ein Anbringen eines weiteren Deckteils 30 verschlossen und somit der Luftstrom besser und gleichmäßiger am Gehäuse 5 entlang geleitet.

Wenn eine Kupplung oder ein Elektromotor mit der eintreibenden Welle verbunden und derart axial nahe an der Lüfterhaube angeordnet ist, dass axial, also durch die Gitterteile 3 und 4, keine Luft strömen kann, ist es aber ermöglicht, dass radial durch die Haubenteile 1 und 2 Luft zum Lüfter hinströmen kann.

Somit ist durch die Ausnehmungen des jeweiligen luftdurchlässigen Bereichs der Haubenteile (1, 2) und durch die Gitterteile (3, 4) ein Einströmen des vom Lüfterrad angesaugten Luftstroms aus radialer und axialer Richtung ermöglicht.

Durch die als unregelmäßiges Polygon geformte Stirnseite der Lüfterhaube ist nicht nur eine gleichmäßige Verteilung des Luftstroms in Umfangsrichtung, sondern auch eine einfache Fertigung der zweigeteilten Lüfterhaube als Stanz-Biegeteile ermöglicht. Die Unterseite des Getriebes fungiert als Fußfläche oder Standfläche und wird nicht vom Luftstrom durchströmt.

Die polygonale Ausformung der Lüfterhaube ermöglicht aber auch das Ausbilden von am jeweiligen Haubenteil abgebogen angeordneten ebenen Laschenbereichen, welche eine einfache Befestigung der ebenso polygonalen Gitterteile (3, 4) ermöglichen.

Die Ausnehmungen des luftdurchlässigen Bereichs an den Gitterteilen 3 und 4 sind jeweils als Sechseck ausgeführt und gleichmäßig voneinander beabstandet. Somit weist der luftdurchlässige Bereich ein ebenes regelmäßiges Gitter von als Sechsecken ausgeführten, axial durch das jeweilige Gitterteil (3, 4) durchgehenden Ausnehmungen auf. Somit ist eine optimierte Ausnutzung der Gitterfläche ermöglicht, insbesondere also eine hohe Stabilität beibehaltbar trotz möglichst viel Luftdurchlass.

Die Haubenteile 1 und 2 weisen hingegen radial durchgehende, als Schlitz, Langloch oder Ellipse geformte Ausnehmungen auf, deren längste Ausdehnung in axialer Richtung ausgerichtet ist. Da die Ausnehmungen in dem den Gitterteilen (3, 4) jeweils benachbarten oder zugewandten Randbereich der Haubenteile (1, 2) angeordnet sind, ist durch diese längliche Ausformung ein möglichst geringer Strömungswiderstand für radial einströmende Luft bewirkt und eine ausreichende Stabilität zur Aufnahme und zum Tragen der Gitterteile (3, 4) mittels der Haubenteile (1, 2).

Zur Erhöhung der Stabilität sind die Haubenteile 1 und 2 möglichst gering ausgedehnt. Um aber den Luftstrom in axialer Richtung möglichst effizient am Gehäuse des Getriebes entlang strömen zu lassen, grenzt an das Haubenteil 1 zum Leiten des Luftstroms ein Deckteil 7 an das Haubenteil 1 an. Das Deckteil 7 erstreckt sich entlang des Gehäuses und ist auch am Gehäuse mittels Laschen 9 befestigt.

Das Deckteil 7 ist wie auch das Haubenteil 1 als Stanz-Biegeteil, insbesondere als Blechteil, gefertigt. Laschen 9, die ebenfalls als Stanz-Biegeteile fertigbar sind, dienen zur Befestigung des Deckteils 7 am Gehäuse. Hierbei ist wichtig, dass der Verbindungsbereich des Deckteils 7, also derjenige Bereich des Deckteils 7, mit welchem die Laschen 9 verbunden sind und/oder in Berührung stehen, eben ausgebildet ist. Dieser Verbindungsbereich des Deckteils 7 ist also in einer Ebene angeordnet, welche nicht parallel ist, also einen nicht verschwindenden Winkel aufweist, zu einem ebenen Oberflächenbereich des Gehäuses des Getriebes. Somit liegt der Verbindungsbereich nicht flächig an dem Oberflächenbereich des Gehäuses des Getriebes an, sondern nur linienhaft, wenn die beiden Teile sich berühren. Daher überbrücken die Laschen 9 den zwischen dem Oberflächenbereich und dem Verbindungsbereich vorhandenen, nicht verschwindenden Winkel.

Der Halterahmen 32 ist aus zwei Stücken ausgeführt, wobei jedes der Stücke jeweils als Stanz-Biegeteil ausgeführt ist. Der Halterahmen 32 ist einerseits am Gehäuse 5 befestigt, insbesondere mittels in Gewindebohrungen eingeschraubter Schrauben, deren Schraubenköpfe das jeweilige Stück ans Gehäuse 5 andrücken. Andererseits sind beide Haubenteile (1, 2) mit jedem der Stücke verbunden. Somit sind die Haubenteile (1, 2) getragen, insbesondere gehalten, von dem Halterahmen 32, der am Gehäuse 5 befestigt ist.

Jedes Stück des Halterahmens 32 weist auch einen Luftleitbereich auf, der in axialer Richtung hervorragt und somit den vom Lüfter geförderten Luftstrom zumindest anteilsweise zwischen dem Stück und dem Gehäuse 5 leitet. Somit strömt ein Anteil des Luftstroms zwischen dem Luftleitbereich des Stücks und dem Gehäuse 5 hindurch. Der Halterahmen 32 ist am Gehäuse 5 befestigt und somit wird der Luftleitbereich freitragend gehalten.

Hingegen ist das Deckteil 7 mittels der Laschen 9 am Gehäuse 5 befestigt.

An den Haubenteilen (1, 2) ist ein Blechteil 50 befestigt, so dass der geförderte Luftstrom gezielt am Gehäuse 5 entlang leitbar ist.

Bei weiteren Ausführungsbeispielen sind am Deckteil 7 selbst die Laschen 9 ausgebildet, indem diese als Biegebereich des Deckteils 7 ausgeführt sind. Somit müssen die Laschen 9 nicht mit dem Deckteil 7 verbunden werden, da sie einstückig, also einteilig, am Deckteil 7 selbst ausgebildet sind und derart gebogen sind, dass sie flächig am Oberflächenbereich des Gehäuses des Getriebes anliegen. Mittels des Schraubenkopfs einer in eine Gewindebohrung des Gehäuses eingeschraubten Schraube ist die jeweilige Lasche 9 ans Gehäuse des Getriebes angedrückt. Somit ist eine einfache und kostengünstige Verbindung erreicht, obwohl der an die Lasche 9angrenzende Bereich des Deckteils 7 nicht parallel zum die Gewindebohrung aufnehmenden Oberflächenbereich des Gehäuses ausgerichtet ist.

Der Oberflächenbereich ist als ebenes Flächenstück 10 in den Figuren dargestellt.

Bei der elliptischen Ausführung ist die Hauptachse der jeweiligen Ellipse in axialer Richtung ausgerichtet.

Bei weiteren erfindungsgemäßen Ausführungsbeispielen wird statt der Zweiteilung der Lüfterhaube eine Mehrfachteilung ausgeführt.

Bei weiteren erfindungsgemäßen Ausführungsbeispielen werden keine Laschenbereiche an der Innenseite der Haubenteile (1, 2) ausgebildet, sondern an jedes der Haubenteile (1, 2) jeweils ein polygonal geformtes Rahmenteil angeschweißt. Die senkrechte Projektion des Rahmenteils in axialer Richtung gleicht einem Teilbereich eines Polygons. Das ursprünglich eben ausgeführte Rahmenteil ist an jeder Ecke des Polygonteilbereichs gebogen, so dass die jeweilige, zwischen je zwei benachbarten Ecken des Polygons angeordnete Seite des Rahmenteils eben ausgeführt ist und senkrecht zum Haubenteil ausgerichtet ist. Die Normalenrichtung der das Polygon aufnehmenden Ebene ist in axialer Richtung ausgerichtet. Dadurch ist das jeweilige Haubenteil (1, 2) stabilisiert. Zur Bereitstellung einer Gewindebohrung für Schrauben, welche die Gitterteile (3, 4) mit den Haubenteilen (1, 2) verbinden, werden Schraubmuttern an die Rahmenteile angeschweißt. Somit sind die Gitterteile (3, 4) dann anschraubbar mittels der durch eine Ausnehmung des jeweiligen Rahmenteils axial durchgehenden und in die Schraubmuttern eingeschraubten Schrauben, deren Schraubköpfe das jeweilige Gitterteil gegen das jeweilige Rahmenteil drücken.

### Bezugszeichenliste

1 erstes Haubenteil
2 zweites Haubenteil
3 erstes Gitterteil
4 zweites Gitterteil
5 Gehäuse
6 eintreibende Welle
7 Deckteil
8 Lagerdeckel
9 Lasche
10 ebenes Flächenstück
20 Lüfterrad
30 Deckteil
31 Eingriffschutz
32 Halterahmen
50 Blechteil
60 Luftleitbereich eines Stücks des Halterahmens 32

## Patentansprüche

1. Getriebe mit Lüfteranordnung,
wobei die Lüfteranordnung ein Lüfterrad (20), eine Haube, insbesondere also Lüfterhaube, und ein Gitter aufweist,
wobei das Lüfterrad (20) drehfest mit der eintreibenden Welle (6) des Getriebes verbunden ist,
wobei die Haube an einem insbesondere mehrstückig ausgeführten Halterahmen (32) befestigt ist, der am Gehäuse (5) des Getriebes befestigt ist,
wobei die Haube aus zwei Haubenteilen (1, 2) gebildet ist,
**dadurch gekennzeichnet, dass**
**an ein erstes der Haubenteile (1, 2) ein Deckteil (7, 30) angrenzt, das von zumindest einer Lasche (9) getragen und/oder gehalten ist, die mit dem Gehäuse (5) des Getriebes verbunden ist und/oder an diesem Gehäuse (5) befestigt ist,**
**wobei der vom Deckteil (7, 30) in axialer Richtung überdeckte Bereich beabstandet ist von dem vom ersten Haubenteil (1) in axialer Richtung überdeckten Bereich oder an ihn angrenzt,**
**wobei die axiale Richtung die Richtung der Drehachse der eintreibenden Welle (6) ist,**
**wobei die Haube und das Deckteil (7, 30) derart angeordnet und geformt sind, dass ein Anteil des vom Lüfterrad (20) geförderten Luftstroms von der Haube und dem Deckteil (7, 30) zwischen dem Gehäuse (5) des Getriebes und dem Deckteil (7, 30) geleitet wird, wobei das Gitter aus zwei Gitterteilen (3, 4) gebildet ist,**
wobei ein vom ersten Gitterteil (3) in Umfangsrichtung überdeckter Umfangswinkelbereich angrenzt, insbesondere aber nicht überlappend angrenzt, an den vom zweiten Gitterteil in Umfangsrichtung überdeckten Umfangswinkelbereich und wobei der vom ersten Haubenteil (1) in Umfangsrichtung überdeckte Umfangswinkelbereich angrenzt, insbesondere aber nicht überlappend angrenzt, an den vom zweiten Haubenteil (2) in Umfangsrichtung überdeckten Umfangswinkelbereich, wobei der vom ersten Gitterteil (3) in Umfangsrichtung überdeckte Umfangswinkelbereich überlappt mit dem vom ersten Haubenteil (1) überdeckten Umfangswinkelbereich,
**wobei jedes Gitterteil (3, 4) mit jedem der beiden Haubenteile (1, 2) verbunden, insbesondere mittels Schrauben verbunden, ist, also das erste Gitterteil (3) sowohl mit dem ersten als auch mit dem zweiten Haubenteil (2) verbunden ist und das zweite Gitterteil sowohl mit dem ersten als auch mit dem zweiten Haubenteil (2) verbunden ist.**

2. **Getriebe nach Anspruch 1,**
**dadurch gekennzeichnet, dass**
**ein mit der Lasche (9) verbundener Oberflächenbereich des Gehäuses (5) des Getriebes eben ausgebildet ist und somit von einer ersten Ebene umfasst ist,**
**wobei ein Verbindungsbereich des Deckteils (7, 30), welcher die Lasche (9) berührt oder welcher an die Lasche (9) angrenzt, eben ausgebildet ist und somit von einer zweiten Ebene umfasst ist,**
**wobei die erste Ebene zur zweiten Ebene, insbesondere die Normalenrichtung der ersten Ebene zur Normalenrichtung der zweiten Ebene, einen nicht verschwindenden Winkel aufweist, insbesondere also nicht zueinander parallel ausgerichtet ist oder sind.**

3. Getriebe nach einem der vorangegangenen Ansprüche,
**dadurch gekennzeichnet, dass**
**die Lasche (9) als Stanz-Biegeteil hergestellt ist,**
**insbesondere wobei die Lasche (9) mit dem Deckteil (7, 30) mittels einer Schraube verbunden ist, deren Schraubenkopf das Deckteil (7, 30) und die Lasche (9) zu einer Mutter hindrückt, in welche die Schraube eingeschraubt ist,**
**oder dass**
**die Lasche (9) mit dem Deckteil (7, 30) einstückig, insbesondere einteilig, ausgebildet ist, insbesondere als Biegebereich am Deckteil (7, 30) einstückig, insbesondere einteilig, ausgebildet ist.**

4. Getriebe nach einem der vorangegangenen Ansprüche,
**dadurch gekennzeichnet, dass**
**die Lasche (9) von einem Schraubenkopf einer in eine Gewindebohrung des Gehäuses (5) eingeschraubten Schraube ans Gehäuse (5) angedrückt wird.**

5. Getriebe nach einem der vorangegangenen Ansprüche,
**dadurch gekennzeichnet, dass**
**das Deckteil (7, 30) mit dem ersten der beiden Haubenteile (1, 2) verbunden ist**
**und/oder dass**
**der vom Deckteil (7, 30) in axialer Richtung überdeckte Bereich an den vom ersten Haubenteil (1) in axialer Richtung übereckten Bereich angrenzt und/oder beabstandet ist.**

6. Getriebe nach einem der vorangegangenen Ansprüche,
**dadurch gekennzeichnet, dass**
die Gitterteile (3, 4) jeweils derart polygonal ausgeformt sind, dass die Berührfläche zwischen dem jeweiligen Gitterteil (3, 4) und dem jeweiligen Haubenteil (1, 2) jeweils aus ebenen Flächenstücken (10) zusammengesetzt ist, insbesondere so dass eine stabile Verbindung mittels Schrauben herstellbar ist.

7. Getriebe nach einem der vorangegangenen Ansprüche,
**dadurch gekennzeichnet, dass**
zwischen den beiden Gitterteilen (3, 4) eine erste Trennlinie als eine gerade Strecke ausgebildet ist oder als zwei, in Flucht zueinander liegende gerade Strecken ausgebildet ist,
wobei zwischen den beiden Haubenteilen (1, 2) eine zweite Trennlinie als eine ebene, aus geraden Streckenabschnitten zusammengesetzte Kurve ausgebildet ist,
wobei die erste Trennlinie und die Drehachse der eintreibenden Welle (6) eine erste Ebene aufspannen,
wobei die zweite Trennlinie und die Drehachse der eintreibenden Welle (6) eine zweite Ebene aufspannen,
wobei die zweite Ebene zur ersten Ebene senkrecht ausgerichtet ist oder zumindest einen Winkel zwischen 30° und 90° aufweist.

8. Getriebe nach einem der vorangegangenen Ansprüche,
**dadurch gekennzeichnet, dass**
die aus den beiden Haubenteilen (1, 2) gebildete Haube derart geformt ist, dass die Haube eine axial durchgehende Ausnehmung aufweist, insbesondere die bezogen auf die eintreibende Welle (6) mittig angeordnet ist.

9. Getriebe nach einem der vorangegangenen Ansprüche,
**dadurch gekennzeichnet, dass**
an den aus Blech als Stanz-Biegeteile hergestellten Haubenteilen (1, 2) ein jeweiliger, in die Ausnehmung hineinragender Laschenbereich ausgebildet ist, an welchem das erste oder das zweite Gitterteil (3, 4) befestigt ist, insbesondere mittels Schrauben befestigt ist,
insbesondere wobei am jeweiligen Laschenbereich Schraubmuttern angeschweißt sind zur Bereitstellung von Gewindebohrungen für die Schrauben.

10. Getriebe nach einem der vorangegangenen Ansprüche,
**dadurch gekennzeichnet, dass**
an den aus Blech als Stanz-Biegeteile hergestellten Haubenteilen (1, 2) ein jeweiliges, an der Innenseite des jeweiligen Haubenteils (1, 2) angeschweißtes Rahmenteil in die Ausnehmung hineinragt, an welchem das erste oder das zweite Gitterteil (3, 4) befestigt ist, insbesondere mittels Schrauben befestigt ist,
insbesondere wobei am Rahmenteil Schraubmuttern angeschweißt sind zur Bereitstellung von Gewindebohrungen für die Schrauben.

11. Getriebe nach einem der vorangegangenen Ansprüche,
**dadurch gekennzeichnet, dass**
die Ausnehmung insbesondere vollständig von dem Gitter, insbesondere von den beiden Gitterteilen (3, 4), bedeckt,
insbesondere so, dass der axial eintretende Luftstrom durch das Gitter hindurchtritt.

12. Getriebe nach einem der vorangegangenen Ansprüche,
**dadurch gekennzeichnet, dass**
die beiden Gitterteile (3, 4) sich entlang der ersten Trennlinie berühren oder einen Abstand von weniger als 5 mm zueinander aufweisen.

13. Getriebe nach einem der vorangegangenen Ansprüche,
**dadurch gekennzeichnet, dass**
die beiden Haubenteile (1, 2) sich entlang der zweiten Trennlinie berühren oder einen Abstand von weniger als 5 mm zueinander aufweisen,
und/oder dass
der vom Lüfterrad (20) geforderte Luftstrom zwischen dem Gehäuse (5) des Getriebes und der Haube austritt, insbesondere derart gerichtet, dass er an dem Gehäuse (5) des Getriebes entlang strömt,
und/oder dass
die Haube eine in Umfangsrichtung unregelmäßig polygonal geformte Stirnseite aufweist,
insbesondere der radial äußere Umfang der Stirnseite der Haube unregelmäßig polygonal geformt ist,
und/oder dass
die Haubenteile (1, 2) und/oder die Gitterteile (3, 4) jeweils als Stanz-Biegeteile gefertigt sind,
und/oder dass
an jedem Haubenteil (1, 2), insbesondere an der Innenwand jedes Haubenteils, ein Eingriffschutz (31) befestigt ist, welcher zwischen dem jeweiligen Haubenteil (1, 2) und Gehäuse (5) des Getriebes angeordnet ist,
wobei der Eingriffschutz (31) durchgehende Gitteröffnungen aufweist,
insbesondere und von dem vom Lüfterrad (20) geförderten Luftstrom durchströmt wird.

14. Getriebe nach einem der vorangegangenen Ansprüche,
**dadurch gekennzeichnet, dass**
jedes Haubenteil (1, 2) radial durchgehende Ausnehmungen aufweist, welche als Schlitz, Langloch oder Ellipse ausgeformt sind, wobei die jeweils längste Ausdehnung der jeweiligen Ausnehmung in axialer Richtung ausgerichtet ist.

15. Getriebe nach einem der vorangegangenen Ansprüche,
**dadurch gekennzeichnet, dass**
jedes Gitterteil (3, 4) ein gleichmäßiges und/oder regelmäßiges ebenes Gitter von durch das jeweilige Gitterteil (3, 4) axial durchgehenden, insbesondere sechseckförmigen Ausnehmungen, insbesondere Gitteröffnungen, aufweist.

## Claims

1. A gear unit with fan assembly,
wherein the fan assembly has a fan impeller (20), a cowl, in particular therefore a fan cowl, and a grille,
wherein the fan impeller (20) is connected non-rotatably to the input shaft (6) of the gear unit,
wherein the cowl is fastened to a holding frame (32) embodied in particular in multiple pieces which is fastened to the housing (5) of the gear unit,
wherein the cowl is formed of two cowl parts (1, 2),
**characterised in that**
a covering part (7, 30) adjoins a first one of the cowl parts (1, 2), which covering part is supported and/or held by at least one tab (9) which is connected to the housing (5) of the gear unit and/or is fastened to this housing (5),
with the region covered by the covering part (7, 30) in the axial direction being spaced apart from or adjoining the region covered by the first cowl part (1) in the axial direction,
with the axial direction being the direction of the axis of rotation of the input shaft (6),
with the cowl and the covering part (7, 30) being arranged and shaped such that a portion of the air flow conveyed by the fan impeller (20) is conducted by the cowl and the covering part (7, 30) between the housing (5) of the gear unit and the covering part (7, 30),
with the grille being formed of two grille parts (3, 4),
with an angle-at-circumference region covered by the first grille part (3) in the circumferential direction adjoining, but in particular adjoining in a non-overlapping manner, the angle-at-circumference region covered by the second grille part in the circumferential direction, and with the angle-at-circumference region covered by the first cowl part (1) in the circumferential direction adjoining, but in particular adjoining in a non-overlapping manner, the angle-at-circumference region covered by the second cowl part (2) in the circumferential direction, with the angle-at-circumference region covered by the first grille part (3) in the circumferential direction overlapping with the angle-at-circumference region covered by the first cowl part (1),
with each grille part (3, 4) being connected, in particular connected by means of screws, to each of the two cowl parts (1, 2), i.e. the first grille part (3) is connected both to the first and to the second cowl part (2) and the second grille part is connected both to the first and to the second cowl part (2).

2. A gear unit according to claim 1,
**characterised in that**
a surface region, which is connected to the tab (9), of the housing (5) of the gear unit is formed flat and hence is encompassed by a first plane,
with a connection region of the covering part (7, 30) which contacts the tab (9) or adjoins the tab (9) being formed flat and hence being encompassed by a second plane,
with the first plane in relation to the second plane, in particular the normal direction of the first plane in relation to the normal direction of the second plane, having a non-vanishing angle, in particular therefore being oriented not parallel to each other.

3. A gear unit according to one of the preceding claims,
**characterised in that**
the tab (9) is produced as a stamped and bent part,
in particular with the tab (9) being connected to the covering part (7, 30) by means of a screw, the screw head of which presses the covering part (7, 30) and the tab (9) towards a nut into which the screw is screwed,
or **in that**
the tab (9) is formed in one piece, in particular in one part, with the covering part (7, 30), in particular is formed in one piece, in particular in one part, as a bending region on the covering part (7, 30).

4. A gear unit according to one of the preceding claims,
**characterised in that**
the tab (9) is pressed against the housing (5) by a screw head of a screw screwed into a threaded bore in the housing (5).

5. A gear unit according to one of the preceding claims,
**characterised in that**
the covering part (7, 30) is connected to the first of the two cowl parts (1, 2)
and/or **in that**
the region covered by the covering part (7, 30) in the axial direction adjoins and/or is spaced apart from the region covered by the first cowl part (1) in the axial direction.

6. A gear unit according to one of the preceding claims,
**characterised in that**
the grille parts (3, 4) are each formed as a polygon such that the contacting face between the respective grille part (3, 4) and the respective cowl part (1, 2) in each case is composed of flat face pieces (10), in particular so that a stable connection can be produced by means of screws.

7. A gear unit according to one of the preceding claims,
**characterised in that**
between the two grille parts (3, 4) a first parting line is formed as a straight section or as two straight sections which lie flush with each other,
with between the two cowl parts (1, 2) a second parting line being formed as a plane curve composed of straight section portions,
with the first parting line and the axis of rotation of the input shaft (6) spanning a first plane,
with the second parting line and the axis of rotation of the input shaft (6) spanning a second plane,
with the second plane being oriented perpendicularly or at least being at an angle of between 30° and 90° to the first plane.

8. A gear unit according to one of the preceding claims,
**characterised in that**
the cowl which is formed of the two cowl parts (1, 2) is shaped such that the cowl has an axially continuous recess, in particular which is arranged centrally relative to the input shaft (6).

9. A gear unit according to one of the preceding claims,
**characterised in that**
on the cowl parts (1, 2) which are produced as stamped and bent parts from metal sheet there is formed a respective tab region which projects into the recess, to which tab region the first or the second grille part (3, 4) is fastened, in particular is fastened by means of screws,
in particular with screw nuts being welded on the respective tab region to provide threaded bores for the screws.

10. A gear unit according to one of the preceding claims,
**characterised in that**
on the cowl parts (1, 2) which are produced as stamped and bent parts from metal sheet a respective frame part welded on the inside of the respective cowl part (1, 2) projects into the recess, to which frame part the first or the second grille part (3, 4) is fastened, in particular is fastened by means of screws,
in particular with screw nuts being welded on the frame part to provide threaded bores for the screws.

11. A gear unit according to one of the preceding claims,
**characterised in that**
the recess [is] covered in particular completely by the grille, in particular by the two grille parts (3, 4),
in particular such that the axially entering air flow passes through the grille.

12. A gear unit according to one of the preceding claims,
**characterised in that**
the two grille parts (3, 4) contact each other along the first parting line or are at a distance of less than 5 mm from each other.

13. A gear unit according to one of the preceding claims,
**characterised in that**
the two cowl parts (1, 2) contact each other along the second parting line or are at a distance of less than 5 mm from each other,
and/or **in that**
the air flow conveyed by the fan impeller (20) emerges between the housing (5) of the gear unit and the cowl, in particular directed such that it flows along the housing (5) of the gear unit,
and/or **in that**
the cowl has an end face shaped as an irregular polygon in the circumferential direction,
in particular the radially outer periphery of the end face of the cowl is shaped as an irregular polygon,
and/or **in that**
the cowl parts (1, 2) and/or the grille parts (3, 4) are each manufactured as stamped and bent parts,
and/or **in that**
to each cowl part (1, 2), in particular to the inner wall of each cowl part, there is fastened a protective guard (31) which is arranged between the respective cowl part (1, 2) and housing (5) of the gear unit,
with the protective guard (31) having continuous grille openings,
in particular and has the air flow conveyed by the fan impeller (20) flowing through it.

14. A gear unit according to one of the preceding claims,
**characterised in that**
each cowl part (1, 2) has radially continuous recesses which are formed as slots, elongate holes or ellipses, with the longest extent of the respective recess in each case being oriented in the axial direction.

15. A gear unit according to one of the preceding claims,
**characterised in that**
each grille part (3, 4) has a uniform and/or regular flat grille of in particular hexagonal recesses, in particular grille openings, which pass axially through the respective grille part (3, 4).

## Revendications

1. Transmission comprenant un ensemble formant ventilateur,
l'ensemble de ventilateur comprenant une roue de ventilateur (20), un capot, en particulier un capot de ventilateur, et une grille,
la roue de ventilateur (20) étant reliée de manière solidaire en rotation à l'arbre d'entraînement (6) de la transmission,
le capot de ventilateur étant fixé à un cadre de support (32) conçu en particulier en plusieurs pièces, qui est fixé au carter (5) de la transmission,
le capot étant formé de deux parties de capot (1, 2),
**caractérisée par**
une partie de recouvrement (7, 30) adjacente à une première des parties de capot (1, 2), qui est portée et/ou maintenue par au moins une patte (9) qui est reliée au boîtier (5) de la transmission et/ou qui est fixée à ce boîtier (5),
la zone recouverte par la partie de recouvrement (7, 30) dans la direction axiale étant espacée de la zone recouverte par la première partie de capot (1) dans la direction axiale ou adjacente à celle-ci,
la direction axiale étant la direction de l'axe de rotation de l'arbre d'entraînement (6), le capot et la partie de recouvrement (7, 30) étant agencés et formés de manière à ce qu'une partie du flux d'air refoulé par la roue de ventilateur (20) depuis le capot et la partie de recouvrement (7, 30) soit acheminée entre le boîtier (5) de la transmission et la partie de recouvrement (7, 30),
la grille étant formée de deux parties de grille (3, 4),
une zone angulaire périphérique recouverte par la première partie de grille (3) dans la direction circonférentielle étant adjacente, mais en particulier sans chevauchement, à la zone angulaire périphérique recouverte par la seconde partie de grille dans la direction circonférentielle, et la zone angulaire périphérique recouverte par la première partie de capot (1) dans la direction circonférentielle étant adjacente, mais en particulier sans chevauchement, à la zone angulaire périphérique recouverte par la seconde partie de capot (2) dans la direction circonférentielle, la zone angulaire périphérique recouverte par la première partie de grille (3) dans la direction circonférentielle chevauchant la zone angulaire périphérique recouverte par la première partie de capot (1),
chaque partie de grille (3, 4) étant reliée à chacune des deux parties de capot (1, 2), en particulier reliée par des vis, c'est-à-dire que la première partie de grille (3) est reliée à la fois à la première et à la seconde partie de capot (2), et que la seconde partie de grille est reliée à la fois à la première et à la seconde partie de capot (2).

2. Transmission selon la revendication 1,
**caractérisée en ce que**
une zone de surface du boîtier (5) de la transmission reliée à la patte (9) est formée de manière plane et est donc entourée d'un premier plan,
une zone de liaison de la partie de recouvrement (7, 30) qui touche la patte (9) ou qui est adjacente à la patte (9) est formée plane et est donc entourée par un second plan, dans lequel le premier plan présente un angle non décroissant par rapport au second plan, en particulier la direction normale du premier plan par rapport à la direction normale du second plan, en particulier n'est pas ou ne sont pas orientés parallèlement l'un à l'autre.

3. Transmission selon l'une quelconque des revendications précédentes,
**caractérisée en ce que**
la patte (9) est fabriquée sous la forme d'une pièce pliée estampée,
en particulier, la patte (9) étant reliée à la partie de recouvrement (7, 30) au moyen d'une vis dont la tête de vis pousse la partie de recouvrement (7, 30) et la patte (9) vers un écrou dans lequel la vis est vissée,
ou **en ce que**
la patte (9) est réalisée d'un seul tenant avec la partie de recouvrement (7, 30), en particulier d'une seule pièce, en particulier sous la forme d'une zone de pliage sur la partie de recouvrement (7, 30), est réalisée d'un seul tenant, en particulier d'une seule pièce.

4. Transmission selon l'une quelconque des revendications précédentes,
**caractérisée en ce que**
la patte (9) est pressée contre le boîtier (5) par une tête de vis d'une vis vissée dans un alésage fileté du boîtier (5).

5. Transmission selon l'une quelconque des revendications précédentes,
**caractérisée en ce que**
la partie de recouvrement (7, 30) est reliée à la première des deux parties de capot (1, 2)
et/ou **en ce que**
la zone recouverte par la partie de recouvrement (7, 30) dans la direction axiale est adjacente à et/ou espacée de la zone recouverte par la première partie de capot (1) dans la direction axiale.

6. Transmission selon l'une quelconque des revendications précédentes,
**caractérisée en ce que**
les parties de grille (3, 4) sont respectivement formées de manière polygonale de telle manière que la surface de contact entre la partie de grille (3, 4) respective et la partie de capot (1, 2) respective est composée respectivement de pièces de surface planes, en particulier pour qu'une connexion stable puisse être réalisée à l'aide de vis.

7. Transmission selon l'une quelconque des revendications précédentes,
**caractérisée en ce que**
une première ligne de séparation est réalisée entre les deux parties de grille (3, 4) sous la forme d'une ligne droite ou sous la forme de deux lignes droites alignées l'une par rapport à l'autre,
une seconde ligne de séparation étant réalisée entre les deux parties de capot (1, 2) sous la forme d'une courbe plane composée de sections de ligne droite,
la première ligne de séparation et l'axe de rotation de l'arbre d'entraînement (6) s'étendant dans un second plan,
la seconde ligne de séparation et l'axe de rotation de l'arbre d'entraînement (6) s'étendant dans un premier plan,
le second plan étant orienté perpendiculairement par rapport au premier plan ou présentant au moins un angle compris entre 30° et 90°.

8. Transmission selon l'une quelconque des revendications précédentes,
**caractérisée en ce que**
le capot réalisé à partir des deux parties de capot (1, 2) est formé de telle manière que le capot présente un évidement axialement traversant, en particulier agencé au centre par rapport à l'arbre d'entraînement (6).

9. Transmission selon l'une quelconque des revendications précédentes,
**caractérisée en ce que**
une région respective formant patte, faisant saillie dans l'évidement et à laquelle la première ou la deuxième partie de grille (3, 4) est fixée, en particulier au moyen de vis, est formée au niveau des parties de capot (1, 2) fabriquées en tôle sous forme de pièces pliées estampées,
en particulier des écrous étant soudés sur la région respective formant patte afin de fournir des alésages filetés pour les vis.

10. Transmission selon l'une quelconque des revendications précédentes,
**caractérisée en ce que**
au niveau des parties de capot (1, 2) fabriquées en tôle sous forme de pièces pliées estampées, une partie cadre respective, soudée du côté intérieur de la partie de capot (1, 2) respective et à laquelle la première ou la deuxième partie de grille (3, 4) est fixée, en particulier au moyen de vis, fait saillie dans l'évidement,
en particulier dans laquelle des écrous sont soudés sur la partie cadre afin de fournir des alésages filetés pour les vis.

11. Transmission selon l'une quelconque des revendications précédentes,
**caractérisée en ce que**
l'évidement est recouvert en particulier complètement par la grille, en particulier par les deux parties de grille (3, 4),
en particulier de sorte que le flux d'air entrant axialement passe à travers la grille.

12. Transmission selon l'une quelconque des revendications précédentes,
**caractérisé en ce que**
les deux parties de grille (3, 4) sont en contact le long de la première ligne de séparation ou présentent l'une par rapport à l'autre une distance inférieure à 5 mm.

13. Transmission selon l'une quelconque des revendications précédentes,
**caractérisée en ce que**
les deux parties de capot (1, 2) sont en contact le long de la seconde ligne de séparation ou présentent l'une par rapport à l'autre une distance inférieure à 5 mm.
et/ou **en ce que**
le flux d'air requis par la roue de ventilateur (20) sort entre le boîtier (5) de la transmission et le capot, en particulier en étant dirigé de manière à s'écouler le long du boîtier (5) de la transmission.
et/ou **en ce que**
le capot présente une face frontale de forme polygonale irrégulière dans la direction circonférentielle,
la circonférence radialement extérieure de la face frontale du capot est en particulier de forme polygonale irrégulière,
et/ou **en ce que**
les parties de capot (1, 2) et/ou les parties de grille (3, 4) sont respectivement fabriquées sous forme de pièces pliées estampées.
et/ou **en ce que**
une protection contre une mise en prise (31), qui est agencée entre la partie de capot respective (1, 2) et le boîtier (5) de la transmission, est fixée à chaque partie de capot (1, 2), en particulier à la paroi intérieure de chaque partie de capot,
la protection contre une mise en prise (31) présentant des orifices de grille traversants. est parcourue en particulier par le flux d'air transporté par la roue de ventilateur (20).

14. Transmission selon l'une quelconque des revendications précédentes,
**caractérisée en ce que**
chaque partie de capot (1, 2) présente des évidements radialement traversants qui sont réalisés sous forme de fente, de trou allongé ou d'ellipse, dans laquelle la plus longue extension respective de l'évidement respectif est orientée dans la direction axiale.

15. Transmission selon l'une quelconque des revendications précédentes,
**caractérisée en ce que**
chaque partie de grille (3, 4) présente une grille plane uniforme et/ou régulière constituée d'évidements, en particulier d'orifices de grille, en particulier hexagonaux, traversant axialement la partie de grille (3, 4) respective.
